# EUROPÄISCHE PATENTSCHRIFT

(11) **EP 1 994 621 B1**
(45) Veröffentlichungstag und Bekanntmachung des Hinweises auf die Patenterteilung: **20.08.2014**
(21) Anmeldenummer: 07726794.6
(22) Anmeldetag: 12.03.2007
(51) Int. Cl.: H02H 7/08

(54) **ELEKTRONISCHE AUSLÖSEEINHEIT FÜR EINEN MOTORSCHUTZSCHALTER EINES ELEKTROMOTORS**
ELECTRONIC TRIPPING UNIT FOR A MOTOR-CIRCUIT BREAKER OF AN ELECTRIC MOTOR
UNITÉ DE DECLENCHEMENT ÉLECTRONIQUE POUR UN DISJONCTEUR DE PROTECTION DE MOTEUR D'UN MOTEUR ÉLECTRIQUE

(30) Priorität: 14.03.2006 DE 102006011713
(43) Veröffentlichungstag der Anmeldung: 26.11.2008
(73) Patentinhaber: Eaton Electrical IP GmbH & Co. KG, 12529 Schönefeld (DE)
(72) Erfinder: MEID, Wolfgang, 56218 Mülheim-Kärlich (DE)
(74) Vertreter: Eaton IP Group EMEA
(86) Internationale Anmeldenummer: PCT/EP2007/052283
(87) Internationale Veröffentlichungsnummer: WO 2007/104733

(56) Entgegenhaltungen:
- EP-A1- 0 019 904
- EP-A2- 0 343 390
- DE-A1- 1 961 686
- DE-A1- 19 802 831

## Beschreibung

Die vorliegende Erfindung betrifft eine elektronische Auslöseeinheit für einen Motorschutzschalter eines Elektromotors umfassend mindestens eine Detektionseinheit zum Erfassen mindestens eines Strommesswertes mindestens eines Stroms, der dem Elektromotor zugeführt wird; eine Diskriminatorschaltung mit einem Ausgang zur Ausgabe eines Steuersignals zur Steuerung des Motors, wobei sich die Diskriminatorschaltung in einem ersten Zustand befindet, wenn kein Strommesswert des mindestens einen Strommesswertes eine vordefinierte Auslöseschwelle überschreitet, und wobei sich die Diskriminatorschaltung in einem zweiten Zustand befindet, wenn mindestens ein Strommesswert des mindestens einen Strommesswertes die vordefinierte Auslöseschwelle überschreitet; und wobei die Diskriminatorschaltung im ersten Zustand das Ausgangssignal auf einen ersten Pegel setzt, und die Diskriminatorschaltung im zweiten Zustand das Ausgangssignal auf einen zweiten Pegel setzt; und wobei die Diskriminatorschaltung ein spannungsbegrenzendes Bauelement umfasst, und die vordefinierte Auslöseschwelle durch die Durchbruchspannung des spannungsbegrenzenden Bauelements bestimmt wird.

### STAND DER TECHNIK

Motorschutzschalter schützen Elektromotoren durch thermisch ausgelöste Abschaltung vor Überlastung. Sie sind in der Regel mit elektromagnetischen Schnellauslösern kombiniert und primär für dreiphasige Drehstrommotoren gedacht.

Motorschutzschalter können einen Einstellbereich zum Einstellen des Nennstroms des Elektromotors aufweisen, wobei der Nennstrombereich von einem minimal einstellbaren Nennstrom I_{nenn,min} bis zu einem maximal einstellbaren Nennstrom I_{nenn,max} reicht, und sich der eingestellte Nennstrom Iₙₑₙₙ innerhalb dieses Nennstrombereichs befindet.

Der thermische Schutz wird in der Regel durch Bimetalle bewirkt, die durch Heizwicklungen, über die der Motorstrom fliesst, erhitzt werden. Überschreitet die Stromaufnahme auch nur einer Wicklung des Motors den vorgegebenen Wert über mehrere Sekunden, löst das durch die Wärme verformte Bimetall eine Auslöseeinheit des Motorschutzschalters aus und unterbricht den Stromkreis zum Motor.

Der elektromagnetische Schnellauslöser hingegen bewirkt eine sofortige Abschaltung bei Kurzschluss in der Motcrzuleitung oder bei Wicklungsschluss, wobei der elektromagnetische Schnellauslöser typischerweise erst ab dem 14-fachen des maximal einstellbaren Nennstrom anspricht und die Schnellauslösung ausführt.

Die Verwendung von Bimetallen in Motorschutzschalter zeigt den Nachteil, dass der Einstellbereich des Nennstroms des Motorschutzschalters stark eingeschränkt wird. Der Einstellbereich des Nennstroms kann erweitert werden, in dem die Bimetalle durch eine Elektronik ersetzt werden, bei der die dem Motor zugeführten Ströme von einem Stromwandler erfasst werden und eine Abschaltung des Motors in Abhängigkeit der erfassten Ströme erfolgt.

EP 343390 offenbart eine solche Ersetzung.

Der Stromwandler ist in der Regel ein Transformator, dessen primäre Wicklung von einem dem Elektromotor zugeführten Wechselstrom durchflossen wird und in dessen Sekundärkreis der übertragene Strom erfasst wird. Das transformatorische Wandlerprinzip hat allerdings den Nachteil, dass der Kern des Transformators in Sättigung geht, wenn der Primärstrom einen bestimmten Wert überschreitet. Typischerweise gehen die Stromwandler ab dem ca. 8-fachen maximal einstellbaren Nennstrom I_{nenn,max} in Sättigung. Stromwandler, die erst bei höheren Strömen in Sättigung gehen, sind bedeutend kostenintensiver und weisen eine größere Baugröße auf. Durch die Sättigung ändert sich das sekundärseitige, sinusförmige Stromsignal, wobei Spitzen im Stromsignal entstehen, so dass eine Effektivwertberechnung des Stroms mit einem AD-Wandler nur noch mit einer sehr hohen Abtastrate möglich ist.

Somit kann der Motorschutzschalter im Bereich des 8 bis 14-fachen maximal einstellbaren Nennstroms I_{nenn,max} den dem Motor zugeführten Strom nicht mehr mit einem AD-Wandler mit geringer Abtastrate erfassen und eine Auslösung des Motors durchführen. Für eine korrekte Stromerfassung in diesem Bereich müsste die Abtastrate des AD-Wandlers zur Stromerfassung deutlich erhöht werden. Dies bringt den Nachteil mit sich, dass dieser AD-Wandler mit erhöhter Abtastrate einen höheren Implementierungsaufwand benötigt, damit höhere Kosten verursacht und einen höhere Baugröße aufweist. Ein weiterer Nachteil ist darin zu sehen, dass die höhere Abtastrate des AD-Wandlers eine höhere Verlustleistungsaufnahme verursacht.

### AUFGABENSTELLUNG

Der Erfindung liegt davon ausgehend die Aufgabe zugrunde, eine Elektronische Auslöseeinheit für einen Motorschutzschalter zu schaffen, bei der ein Überstrom zu einem Motor mit einfachen Mitteln auch dann erkannt wird, wenn beispielsweise der Stromwandler in Sättigung geht und daher keine Effektivwertberechnung des dem Motor Strom zugeführten Stroms möglich ist, so dass auch im Sättigungsbetrieb des Stromwandlers eine Schnellauslösung zur Abschaltung des Elektromotors durchgeführt werden kann.

Diese Aufgabe wird bei einer Vorrichtung der eingangs genannten Art dadurch gelöst, dass die Elektronische Auslöseeinheit für einen Motorschutzschalter eines Elektromotors mindestens eine Detektionseinheit zum Erfassen mindestens eines Strommesswertes mindestens eines Stroms, der dem Elektromotor zugeführt wird, umfasst; eine Diskriminatorschaltung mit einem Ausgang zur Ausgabe eines Steuersignals zur Steuerung des Motors umfasst, wobei sich die Diskriminatorschaltung in einem ersten Zustand befindet, wenn kein Strommesswert des mindestens einen Strommesswertes eine vordefinierte Auslöseschwelle überschreitet, und wobei sich die Diskriminatorschaltung in einem zweiten Zustand befindet, wenn mindestens ein Strommesswert des mindestens einen Strommesswertes die vordefinierte Auslöseschwelle überschreitet; und wobei die Diskriminatorschaltung im ersten Zustand das Ausgangssignal auf einen ersten Pegel setzt, und die Diskriminatorschaltung im zweiten Zustand das Ausgangssignal auf einen zweiten Pegel setzt; und wobei die Diskriminatorschaltung ein spannungsbegrenzendes Bauelement umfasst, und die vordefinierte Auslöseschwelle durch die Durchbruchspannung des spannungsbegrenzenden Bauelements bestimmt wird.

Die Auslöseschwelle kann beispielsweise so gewählt werden, dass die Diskriminatorschaltung in den zweiten Zustand schaltet und das Ausgangssignal auf den zweiten Pegel setzt, wenn dem Motor ein Strom zugeführt wird, welcher beispielsweise über dem 8-fachen des maximal einstellbaren Nennstroms liegt, so dass die Diskriminatorschaltung das Ausgangssignal auf den zweiten Pegel setzt, wenn mindestens einer des mindestens einen erfassten Strommesswerts einen Wert aufweist, der oberhalb des 8-fachen maximal einstellbaren Nennstroms des Elektromotors liegt. Damit wirkt die Diskriminatorschaltung als Schwellwertdetektor. Das spannungsbegrenzende Bauelement kann beispielsweise eine Zener-Diode sein.

Das Ausgangssignal der Diskriminatorschaltung kann beispielsweise von einer weiteren Verarbeitungseinheit, wie z.B. einem Mikrocontroller, eingelesen werden, so dass diese weitere Verarbeitungseinheit anhand des Pegels des Ausgangssignals erkennt, ob eine Abschaltung des Elektromotors durchgeführt werden soll, und dann beispielsweise ein Auslösemittel zur Unterbrechung der Stromzufuhr zum Elektromotor ansteuert. Das Ausgangssignal kann jedoch auch direkt mit dem Auslösemittel verbunden sein, so dass das Auslösemittel vom Ausgangssignal angesteuert wird und die Stromzufuhr zum Elektromotor unterbricht, wenn das Ausgangssignal den zweiten Pegel aufweist.

Wird das spannungsbegrenzende Elementbeispielsweise durch eine Zener-Diode realisiert, so ist die Zener-Diode derart geschaltet, dass die Zener-Diode in Sperrichtung betrieben wird, und die Durchbruchspannung der Zener-Diode die Auslöseschwelle bestimmt, so dass die Zener-Diode im Durchbruchbereich betrieben wird, wenn mindestens einer des mindestens einen erfassten Strommesswertes die Auslöseschwelle überschreitet. Die Zener-Diode wird hierdurch niederohmig, und ein durch die Zener-Diode fliessender Strom setzt das Ausgangssignal der Diskriminatorschaltung auf den zweiten Pegel, während umgekehrt das Ausgangssignal der Diskriminatorschaltung auf den ersten Pegel gesetzt wird, wenn die Zener-Diode sperrt und kein Strom durch die Zener-Diode fliesst. Damit befindet sich die Diskriminatorschaltung im ersten Zustand, wenn die Zener-Diode nicht im Durchbruchbereich betrieben wird; während sich die Diskriminatorschaltung bei Betrieb der Zener-Diode im Durchbruchbereich im zweiten Zustand befindet. Somit kann mittels der Durchbruchspannung der Zener-Diode die Auslöseschwelle vordefiniert werden, wobei die Durchbruchspannung durch Wahl der die gewünschte Durchspruchspannung besitzende Zener-Diode veränderlich ist. Die Zener-Diode wirkt somit als Schwellwertdetektor.

Wird der Elektromotor beispielsweise durch einen Wechselstrommotor realisiert, so kann mindestens eine der mindestens einen Detektionseinheit beispielsweise ein induktiver Stromwandler sein, wie z.B. ein Transformator, der primärseitig vom zu erfassenden ersten Strom durchflossen wird, und auf dessen Sekundärseite der transformierte erste Strom in die am Ausgang der ersten Detektionseinheit anliegende Spannung umgewandelt wird. Diese Umwandlung kann beispielsweise durch einen Shunt-Widerstand erfolgen.

Somit zeigt die erfindungsgemäße Vorrichtung den Vorteil, dass ohne Messung des mindestens einen Strommesswertes, die z.B. durch einen Spannungsmesser erfolgen könnte, wenn der mindestens eine Strommesswert durch eine Spannung dargestellt wird, das Überschreiten einer vorgebbaren Auslöseschwelle von mindestens einen des mindestens einen Strommesswertes detektiert werden kann und beispielsweise auf Basis dieser Detektion eine Schnellauslösung und damit verbundene Abschaltung des Elektromotors ausgeführt werden kann. Diese Vorrichtung funktioniert auch dann zuverlässig, wenn z.B. ein Stromwandler in einher der mindestens einen Detektionseinheit in Sättigung ist und der dazugehörende Strommesswert durch ein Spannung dargestellt wird, die durch den in Sättigung befindlichen Stromwandler Spannungsspitzen aufweist und somit nicht von z.B. einem AD-Wandler mit geringer Abtastrate erfasse werden kann.

Die vorliegende Erfindung kann jedoch auch zum Erkennen eines dem Überstroms bei Gleichstrommotoren verwendet werden. Hierbei kann mindestens eine der mindestens einen Detektionseinheit beispielsweise ein Widerstand sein, der sich in der Stromzuleitung zum Motor befindet, so dass der erste Strom durch den Widerstand fliesst und die am Widerstand abfallende Spannung am Ausgang der ersten Detektionseinheit anliegt; ferner kann mindestens eine der mindestens einen Detektionseinheit beispielsweise durch einen Magnetfeldwandler realisiert werden, so dass am Ausgaug der ersten Detektionseinheit eine Spannung proportional zum gemessenen Magnetfeld und damit zum ersten Strom anliegt, wobei dieser Magnetfeldwandler beispielsweise durch einen Hallwandler realisiert werden kann.

Die Erfindung sieht vor, dass die Diskriminatorschaltung eine Schalteinheit umfasst, welches in dem ersten Zustand das Ausgangssignal auf den ersten Pegel schaltet, und welches in dem zweiten Zustand das Ausgangssignal auf den zweiten Pegel schaltet.

Das Schalteinheit ist derart mit dem spannungsbegrenzenden Bauelement verbunden, dass ein durch das spannungsbegrenzende Bauelement fliessender Strom die Schalteinheit ansteuert, so dass die Schalteinheit dann das Ausgangssignal auf den zweiten Pegel schaltet, wenn sich das spannungsbegrenzende Bauelement im Durchbruchbetrieb befindet, und umgekehrt die Schalteinheit das Ausgangssignal auf den ersten Pegel schaltet, wenn kein oder nur ein geringer Strom durch das spannugsbegrenzende Bauelement fliesst. Die Schalteinheit kann beispielsweise ein Relais und/oder einen Transistor umfassen.

Eine Ausgestaltung der Erfindung sieht vor, dass die Schalteinheit einen Transistor umfasst.

Der Transistor kann beispielsweise durch einen Feldeffekttransistor realisiert werden, wobei entweder ein Sperrschichtfet, ein Depletion-Mosfet oder ein Enhancement-Mosfet verwendet werden kann. Der Feldeffekttransistor kann sowohl durch einen n-Kanal oder einen p-Kanaltyp realisiert werden. Ferner kann auch ein Bipolartransistor für die Schalteinheit verwendet werden, welcher entweder ein npn- oder ein pnp-Typ sein kann. Darüberhinaus kann die Schalteinheit auch mehr als einen Transistor umfassen.

Eine Ausgestaltung der Erfindung sieht vor, dass der Transistor ein Mosfet ist.

Die Erfindung sieht vor, dass die Diskriminauorschaltung einen Widerstand in Reihe geschaltet zum spannungsbegrenzenden Bauelement umfasst, und die über dem Widerstand abfallende Spannung die Schalteinheit schaltet.

Somit wirken bei dieser Ausgestaltung der Erfindung das spannungsbegrenzende Bauelement und der in Reihe geschaltete Widerstand als Schwellwertdetektor.

Eine Ausgestaltung der Erfindung sieht vor, dass zwischen dem Ausgang der Diskriminatorschaltung und einem Massepotential eine Filterschaltung platziert ist.

Diese Filterschaltung kann beispielsweise eine Tiefpasscharakteristik aufweisen, und somit hochfrequente Anteile des Ausgangssignals dämpfen. Dies kann insbesondere beim Umschalten des Pegels des Ausgangssignals vorteilhaft sein, da hierbei Spannungsspitzen entstehen können, die nachfolgende Verarbeitungseinheiten, wie z.B. Mikrocontroller stören könnten. Die Spannungsspitzen werden durch die Tiefpassfilterschaltung gedämpft. Diese Tiefpassfilterschaltung kann beispielsweise durch einen Kondensator realisiert werden, wobei sich parallel zum Kondensator ein Widerstand befinden kann.

Eine Ausgestaltung der Erfindung sieht vor, dass zwischen dem Ausgang der Diskriminatorschaltung und einem Massepotential ein Spannungsbegrenzer platziert ist.

Der Spannungsbegrenzer kann beispielsweise durch eine Zener-Diode oder eine Z-Diode realisiert werden.

Eine Ausgestaltung der Erfindung sieht vor, dass der Ausgang der Diskriminatorschaltung mit einen Eingang eines Mikrocontrollers verbunden ist, und der Mikrocontroller ferner mit einem Auslösemittel zum Abschalten des Elektromotors verbunden ist, und der Mikrocontroller auf Grundlage des Ausgangssignals der Diskriminatorschaltung den Elektromotor mit Hilfe des Auslösemittels abschaltet.

Das Auslösemittel kann als Kraftspeicher der auf ein Schaltschloß wirkt, als elektromagnetischer Hilfsschalter oder als elektronisches Schaltmittel wie Halbleiterschalter ausgebildet sein, und einen Schaltkreisunterbrecher, wie z.B. einen Schütz, auslösen, so dass der mindestens eine dem Motor zugeführte Strom unterbrochen wird. Der Mikrocontroller liest das Ausgangssignal der Diskriminatorschaltung ein, und löst das Auslösemittel zum Abschalten des Motors dann aus, wenn das Ausgangssignal den zweiten Pegel aufweist.

Eine Ausgestaltung der Erfindung sieht vor, dass die Abschaltung des Elektromotors in einem Zeitraum kleiner als 200ms stattfindet.

Diese Abschaltung innerhalb eines Zeitraums von weniger als 200ms ist insbesondere dann vorteilhaft, wenn die erfindungsgemäße Auslöseeinheit zur Detektion eines dem Motor zugeführten Kurzschlussstrom verwendet wird. Bei einem solchen Kurzschlussstrom muss der Motor zur Schadensvermeidung am Motor und/oder den Zuleitungen innerhalb weniger als 200ms abgeschaltet werden.

Eine Ausgestaltung der Erfindung sieht vor, dass der Elektromotor ein Wechselstrommoter ist.

Der Elektromotor kann sowohl ein Einphasenwechselstrommotor sein, dem dann genau ein Phasenstrom zugeführt wird, er kann allerdings auch ein Mehrphasenwechselstrommotor sein, wie z.B. ein Dreiphasenwechselstrommotor.

Eine Ausgestaltung der Erfindung sieht vor, dass jeder der mindestens einen Detektionseinheit einen Stromwandler mit einer Primärseite und einer Sekundärseite aufweist, durch dessen Primärseite der zu erfassende Strom fließt, so dass dieser primärseitige Strom sekundärseitig auf einen transformierten Strom gewandelt wird, und wobei der erfasste Strommesswert einen Repräsentant des transformierten Stroms darstellt.

Der transformierte Strom kann beispielsweise in eine Spannung umgewandelt werden, so dass diese Spannung den erfassten Strammesswert darstellt und damit den transformierten Strom repräsentiert. Diese Spannung kann beispielsweise durch einen Gleichrichter und einem Shunt-Widerstand erzeugt werden.

Die Stromerfassung erfolgt somit sekundärseitig, so dass die Detektion der Stromüberschreitung durch die Diskriminatorschaltung unabhängig vom absoluten Wert des Nennstroms des Elektromotors erfolgt. Primärseitig können durch verschiedene Wicklungsverhältnisse des Stromwandlers verschiedene Nennstrombereiche realisiert werden. Dies zeigt den Vorteil, dass die Diskriminatorschaltung nicht für jeden verschiedenen Nennstrombereich neu ausgelegt werden muss.

Der Stromwandler geht typischerweise ab einem bestimmten Primärstromwert in Sättigung, so dass ab diesem bestimmten Primärstromwert, d.h. Sättigungsstromwert, der transformierte Strom nicht mehr linear vom primärseitigen Strom abhängt und Spannungsspitzen aufweist. Die Auslöseschwelle der Diskriminatorschaltung kann derart gewählt sein, dass die Diskriminatorschaltung in den zweiten Zustand schaltet, wenn mindestens einer des mindestens einen Strommesswertes den Sättigungsstromwert überschreitet. Dieser Sättigungsstromwert ist somit vom Stromwandler abhängig, und kann beispielsweise beim 8-fachen des maximalen Nennstroms des Nennstrombereichs liegen.

Somit zeigt die erfindungsgemäße Auslöseeinheit den Vorteil, dass auch oberhalb des Sättigungsstromwertes eine Abschaltung des Elektromotors erfolgen kann, obwohl sich der Stromwandler in Sättigung befindet und keine primärseitige Effektivwertberechnung des dem Motor zugeführten Stroms möglich ist. Dies ist insbesondere deshalb vorteilhaft, weil der elektromagnetische Schnellauslöser eines Motorschutzschalters typischerweise erst ab dem 14-fachen des maximalen Nennstroms auslöst, so dass mit Hilfe der vorliegenden Erfindung auch im Bereich zwischen dem Sättigungsstromwert und dem 14-fachen des maximalen Nennstroms eine Abschaltung ausgeführt werden kann. Typischerweise kann der Sättigungsstromwert des Stromwandlers bei dem ca. 8-fachen maximalen Nennstrom liegen. Damit benötigt die erfindungsgemäße Auslöseinheit keine kostenintensiven Stromwandler, die erst ab dem 14-fachen maximalen Nennstrom in Sättigung gehen, d.h. wenn der elektromagnetische Schnellauslöser abschaltet, sondern es können kostengünstigere und auch von der Baugröße her kleiner ausfallende Stromwandler, welche früher in Sättigung gehen, verwendet werden.

Eine Ausgestaltung der Erfindung sieht vor, dass dem Stromwandler durch das Stromwandelverhältnis zwischen der Primärseite und der Sekundärseite ein Nennstrombereich zugeordnet ist, und dieser Nennstrombereich nach oben durch einen maximalen Nennstrom I_{nenn,max} begrenzt wird; und wobei ferner die vordefinierte Auslöseschwelle derart vordefiniert ist, dass die Diskrimatorschaltung in den zweiten Zustand schaltet, wenn mindestens ein Strommesswert des mindestens einen Strommesswertes den 8-fachen maximalen Nennstrom I_{nenn,max} überschreitet.

Eine Ausgestaltung der Erfindung sieht vor, dass bei jeder der mindestens einen Detektionseinheit das Stromwandelverhältnis zwischen der Primärseite und der Sekundärseite in mehreren Stufen einstellbar ist, wobei jede Stufe der mehreren Stufen jeweils einem verschiedenen primärseitigen Nennstrombereich entspricht, derart, dass sich bei jeder Stufe der mehreren Stufen sekundärseitig derselbe Strombereich ergibt.

Beispielsweise kann die Auslöseeinheit einen Drehschalter aufweisen, mit dem sich die verschiedenen Nennstrombereiche auswählen lassen, wobei bei jedem der in der Auslöseeinheit enthaltenen Detektionseinheit das Wicklungsverhältnis auf den ausgewählten Nennstrombereich angepasst wird.

Eine Ausgestaltung der Erfindung sieht vor, dass jede der mindestens einen Detektionseinheit des Weiteren folgende Mittel umfasst: Einen Gleichrichter, welcher an dem sekundärseitigen Ausgang des Stromwandlers angeschlossen ist zum Gleichrichten des transformierten Stroms; und einen Widerstand, der zwischen dem Gleichrichter und einem Massepunkt angeschlossen ist, derart, dass der transformierte und gleichgerichtete Strom durch den Widerstand fließt und über dem Widerstand eine Spannung abfällt, so dass diese Spannung den erfassen Strommesswert darstellt; und einen Ausgang, an dem diese Spannung anliegt.

Der Gleichrichter kann z.B. durch einen Einweggleichrichter realisiert werden, oder aber auch durch einen Mehrwegegleichrichter.

Der Widerstand kann ferner derart an den Gleichrichter angeschlossen sein, dass bei einem positiven ersten Phasenstrom über dem ersten Widerstand eine negative Spannung abfällt.

Eine Ausgestaltung der Erfindung sieht vor, dass der Gleichrichter ein Brückengleichrichter ist, und ein zweiter Ausgang des Brückengleichrichters eine Versorgungsspannung bereitstellt.

Eine Ausgestaltung der Erfindung sieht vor, dass die Diskriminatorschaltung einen Eingang umfasst, welcher mit dem spannungsbegrenzenden Bauelement verbunden ist; und der Ausgang jeder der mindestens einen Detektionseinheit mit dem Eingang der Diskriminatorschaltung verbunden ist.

Eine Ausgestaltung der Erfindung sieht vor, dass dem Elektromotor mindestens zwei Ströme zugeführt werden, und jeder der mindestens zwei Ströme von jeweils einer der mindestens einen Detektionseinheit erfasst wird, so dass die elektronische Auslöseeinheit mindestens zwei Detektionseinheiten umfasst, und wobei zwischen dem Ausgang jeder der mindestens zwei Detektionseinheiten und dem Eingang der Diskriminatorschaltung ein Entkopplungselement platziert ist.

Gemäß dieser Ausgestaltung ist der Elektromotor ein mehrphasiger Elektromotor, wie beispielsweise ein Dreiphasen-Wechselstrommotor (Drehstrommotor). Jeder der dem Elektromotor zugeführten Phasenströme wird durch jeweils eine Detektionseinheit erfasst, wobei jede der Detektionseinheiten einen Ausgang aufweist, an dem der jeweils gemessene Stromwert in Form einer Spannung anliegt. Diese Spannung kann negativ gegen Masse sein. Das Entkopplungselement, welches zwischen dem Ausgang jeder der Detektionseinheiten und dem Eingang der Diskriminatorschaltung platziert ist, sorgt für eine Entkopplung der einzelnen Detektionseinheiten untereinander, so dass sich die jeweils an den Ausgängen der Detektionseinheiten anliegenden Spannungen nicht gegenseitig beeinflussen.

Eine Ausgestaltung der Erfindung sieht vor, dass das Entkopplungselement eine Diode ist.

Eine Ausgestaltung der Erfindung sieht vor, dass ferner jeder des mindestens einen erfassten Strommesswertes an den Mikrocontroller geleitet wird, und wobei der Mikrocontroller auf Grundlage des mindestens einen erfassten Strommesswertes und des Nennstroms des Elektromotors den Elektromotor mit Hilfe des Auslösemittels abschaltet.

Der Mikrocontroller kann somit jeden des mindestens einen erfassten Strommesswertes einlesen, z.B. mit Hilfe mindestens einen Spannungsmessers, wenn der mindestens eine erfasste Strommesswert von der jeweiligen Detektionseinheit in Form einer Spannung ausgegeben wird. Damit kann der Mikrocontroller den Motor anhand des mindestens einen erfassten Strommesswertes überwachen, wenn der mindestens eine erfasste Strommesswert linear abhängig vom jeweiligen dem Motor zugeführten Strom ist, d.h. wenn sich der Stromwandler in der mindestens einen Detektionseinheit nicht in Sättigung befindet. Dies ist beispielsweise dann der Fall, wenn der mindestens eine primärseitige Strom unterhalb des Sättigungsstromwerts liegt. Somit kann der Mikrocontroller hierbei beispielsweise erkennen, ob mindestens einer des mindestens einen erfassten Strommesswertes oberhalb eines vorgebbaren Grenzwerts liegt, so dass bei Überschreitung dieses Grenzwertes eine Schnellabschaltung des Motors ausgeführt wird. Dieser vorgebbare Grenzwert kann beispielsweise der 8-fache Nennstrom des Elektromotors sein, wobei der Nennstrom des Elektromotors und/oder der vorgebbare Grenzwert über eine Schnittstelle in den Mikrocontroller eingegeben werden kann.

Somit kann beispielsweise die Motorüberwachung und eine eventuelle Abschaltung des Motors durch den Mikrocontroller ausgeführt werden, wenn sich die primärseitigen Ströme unterhalb des Sättigungsstromwertes befindet, während die Diskriminatorschaltung eine Abschaltung des Motors veranlasst, wenn einer der primärseitigen Ströme den Sättigungsstromwert überschreitet.

Ferner kann im Mikrocontroller ein Kennlininenfeld für verschiedene Auslösekennlinien des Motorschutzschalters gespeichert sein, wobei jede der Kennlininen die Auslösezeit in Abhängigkeit eines dem Motor zugeführten Stroms, welcher auf den Nennstrom normiert ist, für jeweils einen Trägheitsgrad tᵣ angibt. Der Mikrocontroller kann durch die Schnittstelle einen vorgebbaren Trägheitsgrad tᵣ einlesen, hiermit die entsprechende Auslösekennlinie aus dem Kennlinienfeld auswählen, und auf Basis des mindestens einen gemessenen Strommesswertes und der ausgewählten Kennlinie eine verzögerte thermische Abschaltung des Motors ausführen. Damit benötigt der Motorschutzschalter keine Bimetalle für diese thermische Abschaltung, so dass sowohl die thermische Abschaltung, als auch die Schnellabschaltung bei Überström bzw. Kurzschluß durch die erfindungsgemäße Auslöseinheit realisiert werden kann.

Eine Ausgestaltung der Erfindung sieht vor, dass das spannungsbegrenzende Bauteil eine Zener-Diode ist.

### AUSFÜHRUNGSBEISPIEL

Die Erfindung wird im folgenden anhand von Zeichnungen, die zwei Ausführungsbeispiele zeigen, näher erläutert.

Dabei zeigen:
- Fig. 1:: Ein schematisches Blockdiagramm einer erfindungsgemäßen elektronischen Auslöseeinheit für einen Motorschutzschalter gemäß einer Ausführungsform;
- Fig. 2:: Eine weitere Ausführungsform einer erfindungsgemäßen elektronischen Auslöseeinheit für einen Motorschutzschalter;
- Fig. 3:: Die Auslöse- beziehungsweise Überlastkennlinien einer erfindungsgemäßen elektronischen Auslöseeinheit für einen Motorschutzschalter.

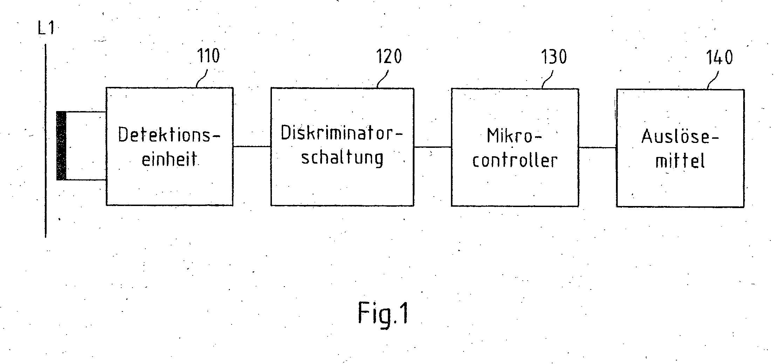

Das in Fig. 1 dargestellte Blockdiagramm zeigt schematisch eine Ausführungsform der erfindungsmäßen elektronischen Auslöseeinheit für einen Motorschutzschalter.

Die Detektionseinheit **110** erfasst mittels eines Stromwandlers einen einem Elektromotor zugeführten Strom und gibt einen Strommesswert an die Diskriminatorschaltung **120** weiter. Dieser Strommesswert kann beispielsweise durch ein Spannung dargestellt sein. Der Elektromotor kann entweder ein Gleichstrommotor oder ein Wechselstrommotor sein. Die Diskriminatorschaltung 120 umfasst ein spannungsbegrenzendes Bauelement (in Fig. 1 nicht gezeigt), wie beispielsweise eine Zener-Diode, wobei die Durchbruchspannung des spannungsbegrenzenden Bauelements eine Auslöseschwelle definiert, und die Diskriminatorschaltung das Ausgangssignal auf einen ersten Pegel setzt, wenn der erfasste Strommesswert unterhalb der Auslöseschwelle liegt, und ferner das Ausgangssignal auf einen zweiten Pegel setzt, wenn der erfasste Strommesswert oberhalb der Auslöseschwelle liegt. Das Ausgangssignal wird zur weiteren Verarbeitung an einen Mikrocontroller **130** geleitet, der mit Hilfe des Auslösemittels **140** den Elektromotor abschaltet, wenn das Ausgangssignal den zweiten Pegel aufweist.

Somit kann mit der erfindungsgemäßen elektronischen Auslöseeinheit erkannt werden, ob ein dem Motor zugeführter Strom einen vorbestimmten Wert überschreitet, so dass bei Überschreiten dieses Wertes der Motor abgeschaltet wird.

Eine mögliche Realisierung der Detektionseinheit **110** und der Diskriminatorschaltung **120** wird anhand des folgenden weiteren Ausführungsbeispiels beschreiben.

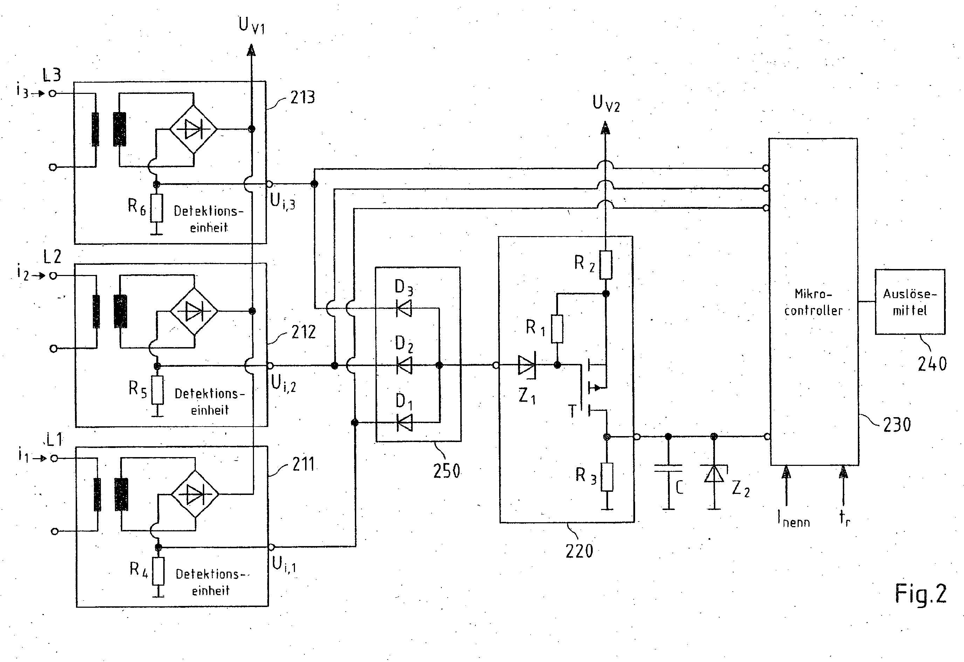

Fig. 2 zeigt den Aufbau einer erfindungsgemäßen elektronischen Auslöseeinheit für einen Motorschutzschalter gemäß einer weiteren Ausführungsform. Die erfindungsgemäße Auslöseeinheit weist im dargestellten Ausführungsbeispiel drei Detektionseinheiten **211, 212, 213** zum Erfassen der drei dem Elektromotor zugeführten Phasenströme i₁, eine Entkopplungsschaltung **250,** eine Diskriminatorschaltung **220,** einen Mikrocontroller **230** und ein Auslösemittel **240** auf.

Die Funktionsweise jeder der drei Detektionseinheiten **211, 212, 213** wird nun im Folgenden anhand der ersten Detektionseinheit **211** beschrieben. Diese Ausführungen gelten gleichermaßen für die beiden weiteren Detektionseinheiten **212** und **213**.

Die erste Detektionseinheit **211** erfasst den ersten dem Elektromotor zugeführten positiven Strom i₁, so dass am Ausgang der ersten Detektionseinheit **211** eine negative Spannung U_{i,1} anliegt, welche vom erfassten Strom i₁ abhängt. Solange der in der ersten Detektionseinheit **211** enthaltene Stromwandler nicht in Sättigung geht, ist die Spannung U_{i,1} proportional zum erfassten Strom i₁. Der in der ersten Detektionseinheit **211** verwendete Stromwandler weist auf der Primärseite, d.h. auf der vom Strom i₁ durchflossenen Seite, nur eine geringe Windungsanzahl auf, während die Windungszahl auf der Sekundärseite wesentlich höher ist. Somit kann ein höherer primärseitiger Strom i₁ auf einen kleineren sekundärseitigen Strom transformiert werden. Das Wicklungszahlverhältnis kann vorzugsweise so ausgewählt werden, dass sich unabhängig vom jeweiligen primärseitig zu erfassenden Strombereich, der vom jeweils eingesetzte Elektromotor und dem Nennstrom des Elektromotors abhängt, sekundärseitig ein konstanter Strombereich ergibt. Somit muss die sekundärseitige Schaltung zur Schwellwertdetektion nicht für jeden verschiedenen primärseitig zu erfassenden Strombereich neu dimensioniert werden.

Beispielsweise kann der Stromwandler derart ausgestaltet sein, dass verschiedene Wicklungsverhältnisse abgreifbar sind und sich damit verschiedene Nennstrombereiche realisieren lassen. So kann der Stromwandler durch diese verschiedenen Wicklungsverhältnisse beispielsweise die folgenden vier Nennstrombereiche realisieren:

| | I_{nenn,min} | I_{nenn,max} |
|---|---|---|
| Nennstrombereich I | 0,3 A | 1,2 A |
| Nennstrombereich II | 1,0 A | 4,0 A |
| Nennstrombereich III | 3,0 A | 12 A |
| Nennstrombereich IV | 8,0 A | 32 A |

Diese Nennstrombereiche können beispielsweise durch einen Drehschalter einstellbar sein.

Damit ist beispielsweise im Nennstrombereich III der Nennstrom zwischen dem minimalen Nennstrom I_{nenn,min} = 3,0 A und dem maximalen Nennstrom I_{nenn,max} = 12 A auf den Elektromotor einstellbar. Der Stromwandler geht ab dem ca. 8-fachen maximalen Nennstrom I_{nenn,max} in Sättigung, d.h. im Falle des Nennstrombereichs III ab dem Sättigungsstromwert von 96 A.

Wie in Fig. 2 gezeigt, umfasst die erste Detektioneinheit 211 einen Brückengleichrichter, durch den der transformierte Strom i₁ fliesst. Ein Ausgang des Brückengleichrichters stellt die Versorgungsspannung U_{V,1} dar, während ein anderer Ausgang des Brückengleichrichters über einen Widerstand R₄ gegen Masse verbunden ist. Somit fliesst der transformierte und gleichgerichtete Strom i₁ durch den Widerstand R₄, so dass über dem Widerstand R₄ gegen Masse die negative Spannung U_{i,1} abfällt, und diese negative Spannung U_{i,1} am Ausgang der ersten Detektionseinheit anliegt. Die negative Spannung U_{i,1} stellt damit den ersten Strommesswert des ersten dem Motor zugeführten Strom i₁ dar. Überschreitet der Strom i₁ den 8-fachen maximalen Nennstrom des gerade ausgewählten Nennstrombereichs I_{nenn,nax}, d.h. i₁ > 8.I_{nenn,max}, so geht der Stromwandler in Sättigung, und die Spannung U_{i,1} ist nicht mehr proportional zum zu erfassenden Strom i₁ und kann Spannungsspitzen aufweisen, womit eine Stromerfassung durch eine Effektivwertberechnung nicht mehr möglich ist.

Analog zur ersten Detektionseinheit **221** erfasst die zweite Detektionseinheit **212** den zweiten Phasenstrom i₂, so dass am Ausgang der zweiten Detektionseinheit **212** die von i₂ abhängige negative Spannung U_{i,2} anliegt; und die dritte Detektionseinheit **213** erfasst den dritten Phasenstrom i₃, so dass am Ausgang der dritten Detektionseinheit **213** die von i₃ abhängige negative Spannung U_{i,3} anliegt. Die zweite Detektionseinheit **212** und die dritte Detektionseinheit **213** entsprechen vom Aufbau her der zuvor beschriebenen ersten Detektionseinheit.

Diese drei ausgegebenen negativen Spannungen U_{i,1}, U_{i,2}, U_{i,3} stellen somit Strommesswerte für die dem Motor zugeführten Phasenströme i₁, i₂, i₃ dar.

Da ab dem 8-fachen maximalen Nennstrom I_{nenn,max} des jeweils eingestellten Nennstrombereichs keine Stromerfassung durch eine Effektwertberechnung anhand der drei ausgegebenen negativen Spannungen U_{i,1}, U_{i,2}, U_{i,3} möglich ist, führt die Diskriminatorschaltung **220** ab dem 8-fachen maximalen Nennstrom I_{nenn,max} eine Überstromdetektion durch. Der Ausgang jeder der drei Detektionseinheiten **211, 212, 213** ist über eine Diode D1, D2, D3 mit dem Eingang der Diskriminatorschaltung **220** verbunden. Die drei Dioden D1, D2, D3, welche in der Entkopplungseinheit **250** enthalten sind, wirken hierbei jeweils als Entkopplungselement und verhindern, dass sich die Ausgänge der drei Detektionseinheiten **211, 212, 213** gegenseitig beeinflussen.

Die Diskriminatorschaltung **220** umfasst ein spannungsbegrenzendes Bauelememt, z.B. die Zener-Diode Z1, den Mosfest Transistor T, und drei Widerstände R1, R2, R3. Die Zener-Diode Z1 ist zwischen dem Eingang der Diskriminatorschaltung 220 und Gate des Mosfet-Transistors T platziert. Zwischen Gate und Source des Mosfet-Transistors T befindet sich der Widerstand R1, der somit in Reihe zur Zener-Diode Z1 geschaltet ist. Der Widerstand R2 verbindet Source des Mosfet-Transistors T mit einer Versorgungsspannung U_{V,2}, und der Widerstand R3 verbindet Drain des Mosfet-Transistors T mit Masse.

Die Durchbruchspannung der Zener-Diode Z1 ist so gewählt, dass wenn mindestens einer der drei erfassten Strommesswerte U_{i,1}, U_{i,2}, U_{i,3} den 8-fachen maximalen Nennstrom I_{nenn,max} überschreitet, d.h. wenn mindestens eine der drei negativen Spannungen U_{i,1}, U_{i,2}, U_{i,3} unter einem dem 8-fachen maximalen Nennstrom I_{nenn,max} entsprechenden Spannungspegel fällt, die Zener-Diode Z1 im Durchbruchbereich betrieben wird und ein Strom durch Zener-Diode Z1 in Sperrrichtung fliesst. Dieser Strom fliesst somit auch durch Widerstand R1, so dass die über dem Widerstand R1 abfallende Spannung den Transistor T schaltet, und über dem Widerstand R3 eine Spannung abfällt, die somit am Ausgang der Diskriminatorschaltung **220** anliegt. Hierbei befindet sich die Diskriminatorschaltung **220** im zweiten Zustand, und die am Ausgang anliegende Spannung entspricht dem zweiten Pegel.

Liegt keiner der drei erfassten Strommesswerte U_{i,1}, U_{i,2}, U_{i,3} oberhalb des 8-fachen maximalen Nennstrom I_{nenn,max}, so wird die Durchbruchspannung an der Zener-Diode Z1 nicht erreicht, so dass durch die in Sperrrichtung betriebene Zener-Diode Z1 kein Strom fliesst und damit auch durch Widerstand R1 kein Strom fliesst. Der Transistor T befindet sich dabei im Sperrzustand, so dass durch Widerstand R3 kein Strom fliesst und am Ausgang der Diskriminatorschaltung **220** ein sehr niedriger Spannungspegel bzw. Massepotential anliegt. Hierbei befindet sich die Diskriminatorschaltung **220** im ersten Zustand, und die am Ausgang anliegende Spannung entspricht dem ersten Pegel.

Der Ausgang der Diskriminatorschaltung **220** ist mit einem Eingang des Mikrocontrollers **230** verbunden, wobei sich zwischen dem Ausgang der Diskriminatorschaltung **220** jeweils ein Kondensator C und eine zweite Zener-Diode Z2 gegen Masse befinden. Der Kondenstor C wirkt zusammen mit dem Widerstand R3 als Tiefpass und dämpft hochfrequente Anteile der am Ausgang der Diskriminatorschaltung **220** anliegenden Spannung. Die in Sperrichtung betriebene zweite Zener-Diode Z2 wirkt als Spannungsbegrenzer.

Der Mikrocontroller erfasst somit den Spannungspegel am Ausgang der Diskriminatorschaltung **220,** und führt mit dem Auslösemittel **240** eine Schnellabschaltung des Elektromotor durch, wenn der erfasste Spannungspegel dem zweiten Pegel entspricht, d.h. wenn die Diskriminatarschaltung **220** detektiert hat, dass mindestens einer der drei dem Motor zugeführten Ströme i₁,i₂,i₃ den 8-fachen maximalen Nennstrom I_{nenn,max} übschreitet. Diese Schnellabschaltung erfolgt innerhalb von 200ms.

Ferner liest der Mikrocontroller **230** auch direkt die drei erfassten Strommesswerte U_{i,1},U_{i,2},U_{i,3} der drei Detektionseinheiten **211, 212, 213** ein. Überschreitet keiner der drei Ströme i₁, i₂, i₃ den 8-fachen maximalen Nennstrom, was z.B. vom Mikrocontroller **230** dadurch erkannt werden kann, dass die Diskriminatorschaltung **220** ihren Ausgang auf den ersten Spannungspegel setzt, so kann der Mikrocontroller **230** die Motorüberwachung und eine gegebenenfalls zu erfolgende Abschaltung des Motor auf Grundlage der drei Strommesswerte U_{i,1}, U_{i,2}, U_{i,3} durchführen.

Hierzu kann im Mikrocontroller **230** ein Kennlininenfeld für eine oder verschiedene Auslösekennlinien des Motorschutzschalters gespeichert sein, wobei jede der Kennlininen die Auslösezeit in Abhängigkeit eines dem Motor zugeführten Stroms, welcher auf den Nennstrom normiert ist, für jeweils einen Trägheitsgrad tᵣ angibt. Der Mikrocontroller Kann durch eine Schnittstelle einen vorgebbaren Trägheitsgrad tᵣ einlesen, hiermit die entsprechende Auslösekennlinie aus dem Kennlinienfeld auswählen, und auf Basis des mindestens einen gemessenen Strommesswertes und der ausgewählten Kennlinie eine verzögerte thermische Abschaltung des Motors ausführen. Damit benötigt der Motorschutzschalter keine Bimetalle für diese thermische Abschaltung, so dass sowohl die thermische Abschaltung, als auch die Schnellabschaltung bei Überstrom bzw. Kurzschluß durch die erfindungsgemäße Auslöseinheit realisiert, werden kann. Das Kennlinienfeld kann auch in einem externen Speicher, der mit dem Mikrocontroller **230** verbunden ist, abgespeichert sein.

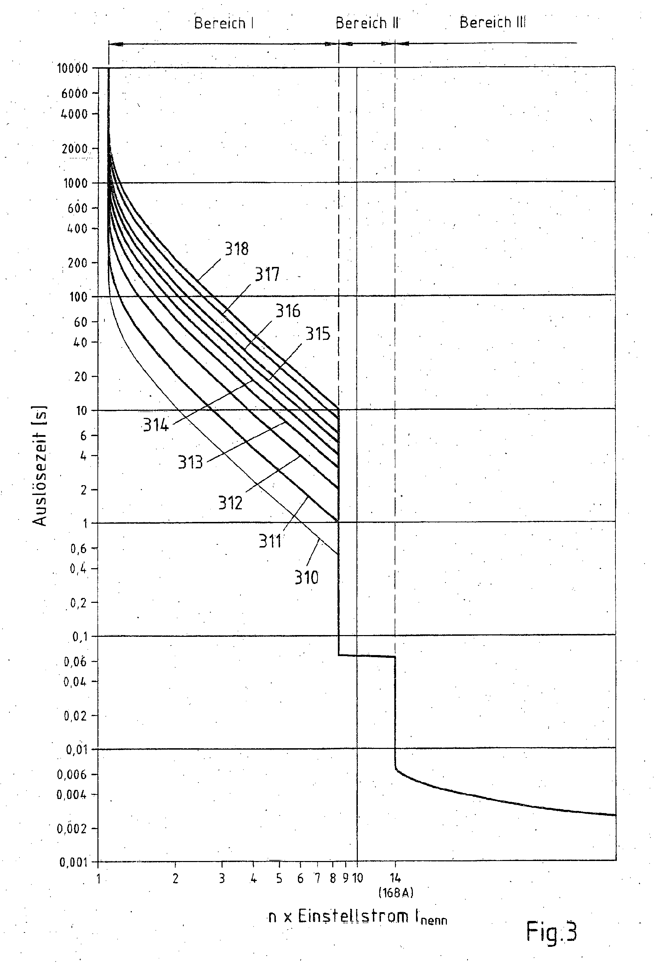

Fig. 3 zeigt die Auslöse- beziehungsweise Überlastkennlinien **310-318** einer erfindungsgemäßen elektronischen Auslöseeinheit für einen Motorschutzschalter anhand eines Kennlinienfeldes, wobei die Auslösezeit (s) in Abhängigkeit vom n-fach überschrittenen eingestellen Nennstrom (n x Iₙₑₙₙ), d.h. dem n-fach überschrittenen Einstellstrom dargestellt ist, wobei jede der Kennlinien **311-318** einem Trägheitsgrad tᵣ aus tᵣ[s]=(2,4,6,8,10,12,16,20) zugeordnet ist, während die untere Kennlinie **310** einem Phasenausfall entspricht.

Der eingestellte Nennstrom Iₙₑₙₙ muss sich innerhalb des ausgewählten Nennstrombereiches befinden. In Fig. 3 ist der eingestellte Nennstrom gleich dem maximalen Nennstrom des Nennstrombereichs III, d.h. der elektromagnetische Schnellauslöser löst aber dem 14-fachen Nennstrom (14*12A = 168 A) aus.

Im Bereich I geht der Stromwandler nicht in Sättigung, da der dem Motor zugeführte Strom unterhalb des 8-fachen maximalen Nennstroms liegt. In diesem Bereich kann der Mikrocontroller **230** anhand der drei erfassten drei erfassten Strommesswerte V_{i,1}, V_{i,2}, V_{i,3} der drei Detektionseinheiten **211, 212, 213** die Motorüberwachung und die Abschaltung des Motors ausführen. Hierzu kann der Mikrocontroller **230** einen Trägheitsgrad tᵣ und den Wert des Nennstroms Iₙₑₙₙ einlesen, beispielsweise über eine Schnittstelle, und anhand der dem Trägheitsgrad zugeordneten Kennlinie überprüfen, ob eine Motorabschaltung ausführen ist, und diese gegebenenfalls mittels des Auslösemittels durchführen. Liegt der eingestellte Nennstrom Iₙₑₙₙ unterhalb des maximal einstellbaren Nennstroms, so kann der Mikrocontroller **230** auch im Bereich bis zum 8-fachen des maximal einstellbaren Nennstroms anhand der erfassten Strommesswerte ein Überschreiten des 8-fachen des eingestellten Nennstrom erkennen und eine Schnellauslösung veranlassen. Erst ab dem 8-flachen des maximal einstellbaren Nennstrom übernimmt dann wieder die Diskriminatorschaltung **220** zusammen mit dem Mikrocomputer die Schnellauslösung.

In im Fig. 3 gezeigten Bereich II befindet sich einer der Stromwandler in Sättigung, da der 8-fache maximale Nennstrom überschritten ist, und die erfindungsgemäße Diskriminatorschaltung **220** erkennt das Überschreiten des 8-fachen maximalen Nennstroms, setzt dann den Ausgangssignal auf den zweiten Pegel, so dass der Mikrocontroller **230** auf Basis des Ausgangssignals der Diskriminatorschaltung **220** eine Schnellabschaltung des Elektromotors durchführt.

In Bereich III hingegen, d.h. ab dem 14-fachen des maximalen Nennstroms, schaltet der elektromagnetische Schnellauslöser des Motorschutzschalters , z.B. eines PKEs, den Motor ab.

Somit zeigt die erfindungsgemäße Auslöseeinheit den Vorteil, dass auch oberhalb der Sättigung der Stromwandler, d.h. insbesondere im Bereich II, eine Abschaltung des Elektromotors erfolgen kann, obwohl sich der Stromwandler in Sättigung befindet und keine primärseitige Effektivwertberechnung des dem Motor zugeführten Stroms möglich ist. Dies ist insbesondere deshalb vorteilhaft, weil der elektromagnetische Schnellauslöser eines Motorschutzschalters typischerweise erst ab dem 14-fachen des maximalen Nennstroms auslöst, so dass mit Hilfe der vorliegenden Erfindung auch im Bereich zwischen dem Sättigungsstromwert und dem 14-fachen des maximalen Nennstroms, d.h. im Bereich II, eine Abschaltung bzw. Schnellabschaltung ausgeführt werden kann.

Hierdurch zeigt die erfindungsgemäße Lösung auch den Vorteil, dass keine Stromwandler verwendet werden müssen, welche erst ab dem 14-fachen des maximalen Nennstroms in Sättigung gehen, sondern dass kostengünstigere und von der Baugröße kleiner ausfallende Stromwandler verwendet werden können, welche schon ab dem 8-fachen des maximalen Nennstroms in Sättigung gehen.

Ferner werden bei der erfindungsgemäßen Auslöseinheit keine AD-Wandler mit erhöhter Abtastrate zur Stromerfassung im Bereich des 8 bis 14-fachen maximal einstellbaren Nennstroms I_{nenn,max} benötigt, welche nötig wären, um eine Effektivwertermittlung der dem Motor zugeführten Ströme trotz der sich in Sättigung befindenden Stromwandler durchzuführen, da das sekundärseitige Stromsignal sich in diesem Bereich ändert und Spitzen aufweist. Daher können die im Mikrocontroller **230** verwendeten Spannungsmesser mit einer geringeren Abtastrate betrieben werden, so dass der Stromverbrauch des Mikrocontrollers **230** gesenkt wird.

## Patentansprüche

1. Elektronische Auslöseeinheit für einen Motorschutzschalter eines Elektromotors umfassend:
mindestens eine Detektionseinheit (110, 211, 212, 213) zum Erfassen mindestens eines Strommesswertes mindestens eines Stroms, der dem Elektromotor zugeführt wird;
eine Diskriminatorschaltung (120, 220) mit einem Ausgang zur Ausgabe eines Steuersignals zur Steuerung des Motors, wobei sich die Diskriminatorschaltung (120, 220) in einem ersten Zustand befindet, wenn kein Strommesswert des mindestens einen Strommesswertes eine vordefinierte Auslöseschwelle überschreitet, und wobei sich die Diskriminatorschaltung (120, 220) in einem zweiten Zustand befindet, wenn mindestens ein Strommesswert des mindestens einen Strommesswertes die vordefinierte Auslöseschwelle überschreitet;
und wobei die Diskriminatorschaltung (120, 220) im ersten Zustand das Ausgangssignal auf einen ersten Pegel setzt, und die Diskriminatorschaltung (120, 220) im zweiten Zustand das Ausgangssignal auf einen zweiten Pegel setzt;
und wobei die Diskriminatorschaltung (120, 220) ein spannungsbegrenzendes Bauteil umfasst, und die vordefinierte Auslöseschwelle durch die Durchbruchspannung des spannungsbegrenzenden Bauteils bestimmt wird, und
wobei die Diskriminatorschaltung (120, 220) eine Schalteinheit umfasst, welches in dem ersten Zustand das Ausgangssignal auf den ersten Pegel schaltet, und welches in dem zweiten Zustand das Ausgangssignal auf den zweiten Pegel schaltet, und wobei die Diskriminatorschaltung (120, 220) einen Widerstand in Reihe geschaltet zum spannungsbegrenzenden Bauelement umfasst, und die über dem Widerstand abfallende Spannung die Schalteinheit schaltet.

2. Vorrichtung nach Anspruch 1, wobei die Schalteinheit einen Transistor umfasst.

3. Vorrichtung nach Anspruch 2, wobei der Transistor ein MOSFET ist.

4. Vorrichtung nach einem der Ansprüche 1 bis 3, wobei zwischen dem Ausgang der Diskriminatorschaltung (120, 220) und einem Massepotential eine Filterschaltung platziert ist.

5. Vorrichtung nach einem der Ansprüche 1 bis 4, wobei zwischen dem Ausgang der Diskriminatorschaltung (120, 220) und einem Massepotential ein Spannungsbegrenzer platziert ist.

6. Vorrichtung nach einem der Ansprüche 1 bis 5, wobei der Ausgang der Diskriminatorschaltung (120, 220) mit einen Eingang eines Mikrocontrollers (130, 230) verbunden ist, und der Mikrocontroller (130, 140) ferner mit einem Auslösemittel (140, 240) zum Abschalten des Elektromotors verbunden ist, und der Mikrocontroller (130, 230) auf Grundlage des Ausgangssignals der Diskriminatorschaltung (120, 220) den Elektromotor mit Hilfe des Auslösemittels (140, 240) abschaltet.

7. Vorrichtung nach Anspruch 6, wobei die Abschaltung des Elektromotors in einem Zeitraum kleiner als 200ms stattfindet.

8. Vorrichtung nach einem der Ansprüche 1 bis 7, wobei der Elektromotor ein Wechselstrommotor ist.

9. Vorrichtung nach Anspruch 8, wobei jeder der mindestens einen Detektionseinheit (110, 211, 212, 213) einen Stromwandler mit einer Primärseite und einer Sekundärseite aufweist, durch dessen Primärseite der zu erfassende Strom fließt, so dass dieser primärseitige Strom sekundärseitig auf einen transformierten Strom gewandelt wird, und wobei der erfasste Strommesswert ein Repräsentant des transformierten Stroms darstellt.

10. Vorrichtung nach Anspruch 9, wobei dem Stromwandler durch das Stromwandelverhältnis zwischen der Primärseite und der Sekundärseite ein Nennstrombereich zugeordnet ist, und dieser Nennstrombereich nach oben durch einen maximalen Nennstrom I_{nenn,max} begrenzt wird; und wobei ferner die vordefinierte Auslöseschwelle derart vordefiniert ist, dass die Diskrimatorschaltung (120, 220) in den zweiten Zustand schaltet, wenn mindestens ein Strommesswert des mindestens einen Strommesswertes den 8-fachen maximalen Nennstrom I_{nenn,max} überschreitet.

11. Vorrichtung nach Anspruch 9 oder 10, wobei bei jeder der mindestens einen Detektionseinheit (110, 211, 212, 213) das Stromwandelverhältnis zwischen der Primärseite und der Sekundärseite in mehreren Stufen einstellbar ist, wobei jede Stufe der mehreren Stufen jeweils einem verschiedenen primärseitigen Nennstrombereich entspricht, derart, dass sich bei jeder Stufe der mehreren Stufen sekundärseitig derselbe Strombereich ergibt.

12. Vorrichtung nach einem der Ansprüche 9 bis 12, wobei jede der mindestens einen Detektionseinheit (110, 211, 212, 213) des Weiteren folgende Mittel umfasst:
- einen Gleichrichter, welcher an dem sekundärseitigen Ausgang des Stromwandlers angeschlossen ist zum Gleichrichten des transformierten Stroms; und
- einen Widerstand, der zwischen dem Gleichrichter und einem Massepunkt angeschlossen ist, derart, dass der transformierte und gleichgerichtete Strom durch den Widerstand fließt und über dem Widerstand eine Spannung abfällt, so dass diese Spannung den erfassten Strommesswert darstellt; und
- einen Ausgang, an dem diese Spannung anliegt.

13. Vorrichtung nach Anspruch 12, wobei der Gleichrichter ein Brückengleichrichter ist, und ein zweiter Ausgang des Brückengleichrichters eine Versorgungsspannung bereitstellt.

14. Vorrichtung nach Anspruch 12 oder 13, wobei die Diskriminatorschaltung (120, 220) einen Eingang umfasst, welcher mit der Zener-Diode verbunden ist; und der Ausgang jeder der mindestens einen Detektionseinheit (110, 211, 212, 213) mit dem Eingang der Diskriminatorschaltung (120, 220) verbunden ist.

15. Vorrichtung nach Anspruch 14, wobei dem Elektromotor mindestens zwei Ströme zugeführt werden, und jeder der mindestens zwei Ströme von jeweils einer der mindestens einen Detektionseinheit (110, 211, 212, 213) erfasst wird, so dass die elektronische Auslöseeinheit mindestens zwei Detektionseinheiten (110, 211, 212, 213) umfasst, und wobei zwischen dem Ausgang jeder der mindestens zwei Detektionseinheiten (110, 211, 212, 213) und dem Eingang der Diskriminatorschaltung (120, 220) ein Entkopplungselement platziert ist.

16. Vorrichtung nach Anspruch 15, wobei das Entkopplungselement eine Diode ist.

17. Vorrichtung nach einem der Ansprüche 6 bis 16, wobei ferner jeder des mindestens einen erfassten Strommesswertes an den Mikrocontroller (130, 230) geleitet wird, und wobei der Mikrocontroller (130, 230) auf Grundlage des mindestens einen erfassten Strommesswertes und des Nennstroms des Elektromotors den Elektromotor mit Hilfe des Auslösemittels (140, 240) abschaltet.

18. Vorrichtung nach einem der Ansprüche 1 bis 17, wobei das spannungsbegrenzende Bauteil eine Zener-Diode ist.

## Claims

1. An electronic triggering unit for a motor protection circuit breaker of an electric motor, including at least one detection unit (110, 211, 212, 213) for acquiring at least one current measurement value of at least one current which is fed to the electric motor;
a discriminator circuit (120, 220) with an output for issuing a control signal for controlling the motor, wherein the discriminator circuit (120, 220) is in a first state if no current measurement value of the at least one current measurement value exceeds a predefined trigger level, and wherein the discriminator circuit (120, 220) is in a second state if at least one current measurement value of the at least one current measurement value exceeds the predefined trigger level;
and wherein the discriminator circuit (120, 220), in the first state, sets the output signal to a first level, and the discriminator circuit (120, 220) in the second state sets the output signal to a second level;
and wherein the discriminator circuit (120, 220) includes a voltage-limiting component, and the predefined trigger level is determined by the breakdown voltage of the voltage-limiting component, and wherein the discriminator circuit (120, 220) includes a switching unit which, in the first state, switches the output signal to the first level and which, in the second state, switches the output signal to the second level, and wherein the discriminator circuit (120, 220) includes a resistor connected in series with the voltage-limiting component and which switches the switching unit by means of the voltage drop across the resistor.

2. The device according to Claim 1, wherein the switching unit includes a transistor.

3. The device according to Claim 2, wherein the transistor is a MOSFET.

4. The device according to one of Claims 1 through 3, wherein a filter circuit is inserted between the output of the discriminator circuit (120, 220) and a ground potential.

5. The device according to one of Claims 1 through 4, wherein a voltage limiter is inserted between the output of the discriminator circuit (120, 220) and a ground potential.

6. The device according to one of Claims 1 through 5, wherein the output of the discriminator circuit (120, 220) is connected with an input of a microcontroller (130, 230), and the microcontroller (130, 140) is also connected with a triggering device (140, 240) for switching off the electric motor, and the microcontroller (130, 230) switches off the electric motor on the basis of the output signal of the discriminator circuit (120, 220), with the help of the triggering device (140, 240).

7. The device according to Claim 6, wherein switching off of the electric motor takes place within a time period shorter than 200ms.

8. Device after one of the requirements 1 to 7, whereby the electric motor is an alternating-current motor.

9. The device according to Claim 8, wherein each of the at least one detector unit (110, 211, 212, 213) has a current transformer with a primary side and a secondary side, through the primary side whereof flows the current to be acquired, so that this primary-side current is transformed on the secondary side into a transformed current, and wherein the acquired measured current value constitutes a representative of the transformed current.

10. The device according to Claim 9, wherein a nominal current range is assigned to the current transformer by means of the current transformer ratio between the primary side and the secondary side, and this nominal current range is bounded on the upper end by a maximum nominal current I_{nenn max}; and wherein moreover the predefined trigger level is predefined in such a way that the discriminator circuit (120, 220) switches into the secondary state if at least one measured current value of the at least one measured current value exceeds eight times the maximum nominal current I_{nenn max}.

11. The device according to Claim 9 or 10, wherein, at each of the at least one detection unit (110, 211, 212, 213), the current transformer ratio between the primary side and the secondary side can be set in several increments, wherein each increment corresponds to a different primary-side nominal current range, such that at each increment the same current range occurs on the secondary side.

12. The device according to one of Claims 9 through 12, wherein each of the at least one detection unit (110, 211, 212, 213) includes in addition the following means:
- a rectifier which is connected to the secondary side output of the current transformer for rectifying the transformed current, and
- a resistor which is connected between the rectifier and a grounding point, such that the transformed and rectified current flows through the resistor and a voltage drop occurs through the resistor so that this voltage drop represents the acquired measured current value; and
- an output at which this voltage appears.

13. The device according to Claim 12, wherein the rectifier is a bridge rectifier and a second output of the bridge rectifier provides a power supply voltage.

14. The device according to Claim 12 or 13, wherein the discriminator circuit (120, 220) includes an input which is connected to the Zener diode; and the output of each of the at least one detection unit (110, 211, 212, 213) is connected to the input of the discriminator unit (120, 220).

15. The device according to Claim 14, wherein at least two currents are fed to the electric motor, and each of the two currents is acquired by one of the at least one detection unit (110, 211, 212, 213), so that the electronic trigger unit includes at least two detection units (110, 211, 212, 213), and wherein a decoupling element is inserted between the output of each of the at least two detection units (110, 211, 212, 213) and the input of the discriminator circuit (120, 220).

16. The device according to Claim 15, wherein the decoupling unit is a diode.

17. The device according to one of Claims 6 through 16, wherein each of the at least one acquired measured current value is routed to the microcontroller (130, 230), and wherein the microcontroller (130, 230) switches off the electric motor with the aid of the triggering means (140, 240) on the basis of the at least one acquired measured current value and of the nominal current of the electric motor.

18. The device according to one of Claims 1 through 17, wherein the voltage-limiting component is a Zener diode.

## Revendications

1. Unité de déclenchement électronique pour un disjoncteur de protection de moteur d'un moteur électrique, comprenant au moins une unité de détection (110, 211, 212, 213) destinée à acquérir au moins une valeur de mesure de courant d'au moins un courant qui est transmis au moteur électrique ;
un circuit discriminateur (120, 220) ayant une sortie permettant de délivrer un signal de commande pour commander le moteur, dans laquelle le circuit discriminateur (120, 220) se trouve dans un premier état si aucune valeur de mesure de courant d'au moins une valeur de mesure de courant ne dépasse un niveau de déclenchement prédéfini, et dans laquelle le circuit discriminateur (120, 220) se trouve dans un second état si au moins une valeur de mesure de courant d'au moins une valeur de mesure de courant dépasse le niveau de déclenchement prédéfini ;
et dans laquelle le circuit discriminateur (120, 220), dans le premier état, établit le signal de sortie à un premier niveau, et le circuit discriminateur (120, 220) dans le second état, établit le signal de sortie à un second niveau ;
et dans laquelle le circuit discriminateur (120, 220) comprend un composant limitant la tension, et le niveau de déclenchement prédéfini est déterminé par la tension de claquage du composant limitant la tension, et dans laquelle le circuit discriminateur (120, 220) comprend une unité de commutation qui, dans le premier état, commute le signal de sortie au premier niveau et qui, dans le second état, commute le signal de sortie au second niveau, et dans laquelle le circuit discriminateur (120, 220) comprend une résistance raccordée en série au composant limitant la tension et qui commute l'unité de commutation par la chute de tension à travers la résistance.

2. Dispositif selon la revendication 1, dans lequel l'unité de commutation comprend un transistor.

3. Dispositif selon la revendication 2, dans lequel le transistor est un transistor à effet de champ à semi-conducteur à oxyde métallique (transistor MOSFET).

4. Dispositif selon l'une des revendications 1 à 3, dans lequel un circuit filtre est inséré entre la sortie du circuit discriminateur (120, 220) et un potentiel de masse.

5. Dispositif selon l'une des revendications 1 à 4, dans lequel un limiteur de tension est inséré entre la sortie du circuit discriminateur (120, 220) et un potentiel de masse.

6. Dispositif selon l'une des revendications 1 à 5, dans lequel la sortie du circuit discriminateur (120, 220) est raccordée à une entrée d'un microcontrôleur (130, 230), et le microcontrôleur (130, 140) est également raccordé à un dispositif de déclenchement (140, 240) pour arrêter le moteur électrique, et le microcontrôleur (130, 230) arrête le moteur électrique sur la base du signal de sortie du circuit discriminateur (120, 220), avec l'aide du dispositif de déclenchement (140, 240).

7. Dispositif selon la revendication 6, dans lequel l'arrêt du moteur électrique a lieu pendant une période de temps inférieure à 200 ms.

8. Dispositif après l'une des conditions 1 à 7, de telle sorte que le moteur électrique soit un moteur à courant alternatif.

9. Dispositif selon la revendication 8, dans lequel chaque unité de détection (110, 211, 212, 213) comporte un transformateur de courant ayant un côté primaire et un côté secondaire, le courant qui doit être acquis, circulant à travers le premier côté de ce dernier, de telle sorte que ce courant côté primaire soit transformé sur le côté secondaire en courant transformé, et dans lequel la valeur de courant mesurée acquise constitue une représentation du courant transformé.

10. Dispositif selon la revendication 9, dans lequel une plage de courant nominal est attribuée au transformateur de courant au moyen du rapport de transformation du courant entre le côté primaire et le côté secondaire, et cette plage de courant nominal est limitée sur l'extrémité supérieure par un courant nominal maximal I_{nenn max} ; et dans lequel le niveau de déclenchement prédéfini est en outre prédéfini de telle manière que le circuit discriminateur (120, 220) passe à l'état secondaire si au moins une valeur de courant mesurée de la valeur de courant mesurée dépasse huit fois le courant nominal maximal I_{nenn max}.

11. Dispositif selon la revendication 9 ou 10, dans lequel, au niveau de chaque unité de détection (110, 211, 212, 213), le rapport de transformation du courant entre le côté primaire et le côté secondaire peut être déterminé en plusieurs incréments, dans lequel chaque incrément correspond à une plage de courant nominal côté primaire de telle sorte qu'à chaque incrément, la même plage de courant se produise sur le côté secondaire.

12. Dispositif selon l'une des revendications 9 à 12, dans lequel au moins l'une des unités de détection (110, 211, 212, 213) comprend en plus les éléments suivants :
- un redresseur qui est raccordé à la sortie côté secondaire du transformateur de courant pour redresser le courant transformé, et
- une résistance qui est raccordée entre le redresseur et un point de mise à la terre, de telle sorte que le courant transformé et redressé circule à travers la résistance et qu'une chute de tension se produise à travers la résistance de telle sorte que cette chute de tension constitue la valeur de courant mesurée acquise ; et
- une sortie au niveau de laquelle apparaît cette tension.

13. Dispositif selon la revendication 12, dans lequel le redresseur est un redresseur en pont et une seconde sortie du redresseur en pont donne une tension d'alimentation électrique.

14. Dispositif selon la revendication 12 ou 13, dans lequel le circuit discriminateur (120, 220) comprend une entrée qui est raccordée à la diode Zener ; et la sortie de chaque unité de détection (110, 211, 212, 213) est raccordée à l'entrée de l'unité de discriminateur (120, 220).

15. Dispositif selon la revendication 14, dans lequel au moins deux courants sont transmis au moteur électrique, et chacun des deux courants est acquis par l'une des unités de détection (110, 211, 212, 213), de telle sorte que l'unité de déclenchement électronique comprenne au moins deux unités de détection (110, 211, 212, 213), et dans lequel un élément de découplage est inséré entre la sortie de chacune des au moins deux unités de détection (110, 211, 212, 213) et l'entrée du circuit discriminateur (120, 220).

16. Dispositif selon la revendication 15, dans lequel l'unité de découplage est une diode.

17. Dispositif selon l'une des revendications 6 à 16, dans lequel chaque valeur de courant mesurée acquise est transmise au microcontrôleur (130, 230) et dans lequel le microcontrôleur (130, 230) arrête le moteur électrique avec l'aide des moyens de déclenchement (140, 240) sur la base d'au moins une valeur de courant mesurée acquise du courant nominal du moteur électrique.

18. Dispositif selon l'une des revendications 1 à 17, dans lequel le composant limitant la tension est une diode Zener.
